(19) Europäisches Patentamt
European Patent Office
Office européen des brevets

(11) **EP 3 778 745 A1**

(12) **EUROPEAN PATENT APPLICATION**

(43) Date of publication:
**17.02.2021 Bulletin 2021/07**

(51) Int Cl.:
**C08K 5/01** (2006.01)          **C08L 23/06** (2006.01)
**F16L 9/12** (2006.01)

(21) Application number: **20187000.3**

(22) Date of filing: **11.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2016 JP 2016137437**
**04.08.2016 JP 2016153559**

(62) Document number(s) of the earlier application(s) in accordance with Art. 76 EPC:
**17180795.1 / 3 269 763**

(71) Applicant: **HITACHI-GE NUCLEAR ENERGY, LTD.**
**Hitachi-shi**
**Ibaraki 317-0073 (JP)**

(72) Inventors:
• **HONBOU, Kyouko**
  **Tokyo, 100-8280 (JP)**
• **TERAO, Yoshinori**
  **Ibaraki, 317-0073 (JP)**
• **NAGATA, Junya**
  **Ibaraki, 317-0073 (JP)**

(74) Representative: **MERH-IP Matias Erny Reichl Hoffmann**
**Patentanwälte PartG mbB**
**Paul-Heyse-Strasse 29**
**80336 München (DE)**

Remarks:
This application was filed on 21-07-2020 as a divisional application to the application mentioned under INID code 62.

(54) **POLYETHYLENE RESIN COMPOSITION, AND PIPE MATERIAL, PIPE, AND JOINT INCLUDING THE COMPOSITION**

(57) Disclosed is a polyethylene resin composition which includes: a base material mainly including a polyethylene; and an additive, in which the additive includes a nonpolar substance that is a liquid at room temperature, and a proportion of the additive is 0.1 to 10 parts by mass to the polyethylene of 100 parts by mass. Thus, the polyethylene resin composition can be provided which resists brittle fracture/cracking and stress cracking caused by stress concentration on, if any, invisible minute defects in the composition and which offers sufficient elongation.

*FIG. 3*

EP 3 778 745 A1

**Description**

TECHNICAL FIELD:

The present invention relates to polyethylene resin compositions, and pipe materials, pipes, and joints including the polyethylene resin compositions.

BACKGROUND ART:

Polyethylene pipes are used to transport various fluids. Non-limiting examples of such pipes include water and sewage service pipes, gas pipes, water pipes, hot-water pipes, chemical pipes (liquid chemical pipes), and oil pipes. The pipes require higher and higher safety with each passing year. For example, the gas pipes and the water and sewage service pipes are generally made respectively from pipe materials of PE80 grades and those of PE100 grades. The hot-water pipes are often made from crosslinked polyethylene pipe materials which have excellent heat resistance. In addition, some polyethylene pipes are joined through polyethylene joints. This technique is a welded joint technique called "electrofusion", by which the polyethylene pipes and the polyethylene joints are integrated.

Pipes made of polyethylene pipe materials are known to undergo brittle fracture when the pipes include minute defects. This is because such pipes receive stress caused typically by internal pressure from the inside of pipes, and by external earth pressure when the pipes are embedded, and the stress concentrates on the minute defects.

In particular, demands have been made to develop such materials as to resist brittle fracture/cracking even under severe conditions in which stress is applied over a long term.

To improve long-term mechanical properties of polyethylenes, conventional techniques improve polyethylenes themselves. Exemplary improvements include, as described in Japanese Examined Patent Publication No. Sho 61-42736 (Patent Literature 1) and Japanese Examined Patent Publication No. Sho 61-43378 (Patent Literature 2), broadening of molecular weight distribution and introduction of side chains.

In addition, for example, Japanese Unexamined Patent Application Publication No. Hei 10-17619 (Patent Literature 3) proposes a polyethylene that includes two molecular weight distributions and has a low melt mass flow rate.

Japanese Unexamined Patent Application Publication No. Hei 08-301933 (Patent Literature 4) discloses a polyethylene pipe and pipe joint, each of which is formed from a composition including two components. The two components are a low-molecular-weight and high-density polyethylene; and a high-molecular-weight and low-density polyethylene.

SUMMARY OF THE INVENTION:

According to a first aspect of the present disclosure, a polyethylene resin composition includes: a base material mainly including a polyethylene; and/or an additive, in which the additive includes a nonpolar substance that is a liquid at room temperature, and a proportion of the additive is 0.1 to 10 parts by mass to the polyethylene of 100 parts by mass.

According to a second aspect of the present disclosure, a polyethylene resin composition includes: a base material mainly including a polyethylene; and/or an additive, in which the additive includes an oil which belongs to oils resulting from refining naphthenic crude oils and which is a naphthene-containing oil having a percent naphthenic carbons (%CN) of from 20% to 100% inclusive, where the %CN is determined by an n-d-M ring analysis.

The present invention can provide a polyethylene resin composition which resists brittle fracture/cracking and stress cracking caused by stress concentration on, if any, invisible minute defects in the composition and which offers sufficient elongation.

BRIEF DESCRIPTION OF THE DRAWINGS:

FIG. 1 is a photograph exemplarily showing how a test specimen of a regular polyethylene resin composition ruptures;
FIG. 2 is an enlarged photograph showing a part of FIG. 1;
FIG. 3 is a graph showing measurement results of heat of crystal fusion of polyethylene resin composition samples before and after tensile testing;
FIG. 4 is a graph showing how an elongation at break varies depending on an absorbed dose;
FIG. 5 is a graph showing how an Izod impact test result (impact value at -10°C) varies depending on percent naphthenic carbons (%CN) of oils;
FIG. 6 is a graph showing how the elongation at break varies depending on a polyethylene density; and
FIG. 7 is a graph showing how a crack initiation time in an environmental stress cracking test varies depending on an amount of an oil as added.

DETAILED DESCRIPTION OF THE PREFERRED EMBODIMENTS:

The present invention relates to a long-life polyethylene resin composition that resists brittle fracture/cracking and environmental stress cracking, and relates to a pipe material, a pipe, and a joint each of which includes or is made from the polyethylene resin composition.

The present invention has an object to fundamentally improve brittle fracture/cracking and stress cracking, which are disadvantages inherent to polyethylenes. The present invention provides polyethylene resin compositions which resist brittle fracture/cracking and stress cracking due to stress concentration on, if any, invisible minute defects in the compositions, and which offer sufficient elongation. The present invention also provides pipe materials, pipes, and joints each of which includes or is made from any of the polyethylene resin compositions. In general, hard products such as pipes and joints require long-term strength.

The polyethylene resin compositions according to the present invention have at least a feature (1-1) preferably in combination with one or more of features (1-2), (1-3), (1-4) and (1-5), or at least a feature (2-1) preferably in combination with one or more of features (2-2), (2-3), and (2-4) as follows. The former and the latter groups of features are hereinafter simply referred to respectively as "first feature" and as "second feature".

(1-1) This polyethylene resin composition is a mixture of a base material and an additive, where the base material mainly includes a polyethylene. The additive includes a nonpolar solvent (nonpolar substance) that is liquid at room temperature. The additive is present in a proportion of 0.1 to 10 parts by mass to the polyethylene of 100 parts by mass. As used herein, the term "room temperature" refers to an ambient temperature of about 15°C to about 35°C typically in factories.

(1-2) The nonpolar solvent desirably includes an oil. As used herein, the term "oil" refers to a nonpolar or hydrophobic organic substance.

(1-3) The oil desirably has a flash point of 140°C or higher.

(1-4) The oil desirably includes at least one selected from the group consisting of oils resulting from refining raw-material naphthenic crude oils; and oils resulting from refining raw-material paraffinic crude oils.

(1-5) The oil desirably includes an oil containing an aromatic component.

(2-1) The additive may be an oil which belongs to oils resulting from refining naphthenic crude oils and which is a naphthene-containing oil having a %CN of 20% to 100% inclusive, where the %CN is determined by an n-d-M ring analysis. As used herein, the term "naphthene" refers to a cyclic hydrocarbon. The (n-d-M) ring analysis is an analysis technique which is general as a chemical composition analysis of a base oil. According to this technique, a paraffinic carbon number, a naphthenic carbon number, and an aromatic carbon number are indicated respectively as %CP, %CN, and %CA in terms of percentages relative to the total number of carbons, where the percentages are determined using parameters such as refractive index, density, and molecular weights.

(2-2) The additive is desirably present in a proportion of 0.1 to 7 parts by mass to the polyethylene of 100 parts by mass.

(2-3) The polyethylene desirably mainly includes a high-density polyethylene having a density of from 0.94 g/cm$^3$ to 0.97 g/cm$^3$ inclusive (0.94 to 0.97 g/cm$^3$).

(2-4) The polyethylene resin composition is desirably used as or in a pipe material, a pipe, and a joint, each of which is used to transport cooling water in nuclear facilities and is used to transport a fluid including a radioactive substance.

The base material mainly including a polyethylene (including a polyethylene as a principal component) may be selected from generally-available polyethylene resin pellets, and may also be selected from ones including a polypropylene in a proportion of less than 50 mass percent. The base material may also be a composite material or recycled material including both a polyethylene and a polypropylene.

As used herein the term "to" (from X to Y) refers to a range of numerical values and includes the lower limit and the upper limit of the range. Accordingly, for example, the term "A to B" on numerical values A and B refers to a range which includes numerical values between A and B and which also includes A and B. In other words, the term "A to B" is the same in meaning as the term "equal to or more than A, and equal to or less than B".

Some embodiments of the present invention will be illustrated in further detail below. It should be noted, however, that the embodiments are never construed to limit the scope of the invention, and various improvements and modifications may be made therein without departing from the sprit and scope of the invention.

A polyethylene resin composition according to an embodiment of the present invention includes a polyethylene as a principal component and a nonpolar solvent as an essential additive, where the nonpolar solvent is liquid at room temperature and is present in a proportion of 0.1 to 10 parts by mass to the polyethylene of 100 parts by mass. This polyethylene resin composition is hereinafter also referred to as a "polyethylene resin composition having the first feature". The polyethylene resin composition preferably includes an oil as the nonpolar solvent. In particular, the polyethylene resin composition preferably includes an oil having a flash point of 140°C or higher as the nonpolar solvent.

Specifically, the polyethylene resin composition preferably includes at least one selected from the group consisting of additives (A) and (B) as follows. The total amount of the additives (A) and (B) is 0.1 to 10 parts by mass. The polyethylene resin composition may further include at least one of following additives (C) and (D) in a total proportion of 0.1 to 10 parts by mass.

The additive (A) is an oil resulting from refining a naphthenic crude oil as a raw material. The resulting oil is hereinafter also referred to as a "naphthenic oil".

The naphthenic oil may be one resulting from subjecting the naphthenic crude oil to distillation under reduced pressure, and removing oils containing aromatic components from the distilled product by solvent extraction. This may also be further subjected to refining including an adsorption treatment, or a clay treatment, or a pretreatment and subsequent deoxidation, to give a naphthenic oil to be used. As used herein, the term "naphthenic oil" refers to an oil including a large amount of cyclic hydrocarbons. In particular, the naphthenic oil is desirably one offering solubility and compatibility with the polyethylene and having a solubility parameter (SP) near to the solubility parameter of the polyethylene. Specifically, the naphthenic oil is preferably one having a solubility parameter with a difference, if any, from the solubility parameter of the polyethylene by within ±10%.

The additive (B) is an oil resulting from refining a paraffinic crude oil as a raw material. The resulting oil is hereinafter also referred to as a "paraffinic oil".

The paraffinic oil may be one obtained in the following manner. Specifically, the paraffinic crude oil is subjected to distillation at normal atmospheric pressure and subsequently to distillation under reduced pressure to give a primary product as intact or after solvent deasphalting. This is subjected to hydrogenative reforming and a dewaxing process to give a paraffinic oil for use herein. Alternatively, the paraffinic oil may be one resulting from hydropurification after the dewaxing process. Further alternatively, the paraffinic oil may be one resulting from removing oils containing aromatic components from the primary product by solvent extraction. The resulting paraffinic oil may also be further refined by subjecting the same to a finishing process and subsequently to a dewaxing process. As used herein, the term "paraffinic oil" refers to an oil containing a large amount of chain hydrocarbons. In particular, among such paraffinic oils, preferred is one being highly soluble in the polyethylene and having a solubility parameter of near to the solubility parameter of the polyethylene, where the solubility parameter indicates compatibility. Specifically, the paraffinic oil is preferably one having a solubility parameter with a difference, if any, from the solubility parameter of the polyethylene by within ±10%.

The additive (C) is an oil resulting from refining a naphthenic crude oil as a raw material and including an aromatic component or components. This oil is hereinafter referred to as an "aromatic oil derived from a naphthenic crude oil".

The aromatic oil derived from a naphthenic crude oil may be an aromatic-component-containing oil resulting from subjecting a naphthenic crude oil to distillation under reduced pressure and subsequently to solvent extraction.

The additive (D) is an oil resulting from refining a paraffinic crude oil as a raw material and including an aromatic component or components. This oil is hereinafter referred to as an "aromatic oil derived from a paraffinic crude oil".

The aromatic oil derived from a paraffinic crude oil for use herein may be an aromatic-component-containing oil which results from subjecting a paraffinic crude oil to distillation at normal atmospheric pressure and subsequently to distillation under reduced pressure, and subjecting the resulting product, as intact or after solvent deasphalting, to solvent extraction.

A polyethylene resin composition according to another embodiment of the present invention includes a polyethylene as a principal component, in combination with an oil as an essential additive, where the oil belongs to oils resulting from refining naphthenic crude oils and is a naphthene-containing oil having a %CN of from 20% to 100% inclusive, where the %CN is determined by an n-d-M ring analysis. This polyethylene resin composition is hereinafter also referred to as a "polyethylene resin composition having the second feature". The oil is preferably present in the polyethylene resin composition in a proportion of 0.1 to 7 parts by mass to the polyethylene of 100 parts by mass. The polyethylene preferably mainly includes a high-density polyethylene having a density of from 0.945 $g/cm^3$ to 0.965 $g/cm^3$ inclusive.

Operation and advantageous effects of the polyethylene resin compositions according to the embodiments of the present invention having any of the configurations will be described below.

Polyethylene pipes have lighter weights and can be more easily moved and processed as compared with steel pipes, and are also used as long-distance pipes such as water service pipes. However, the material polyethylenes are polymers including carbon and hydrogen, unlike metal materials such as steels in steel pipes. Of polymeric materials, the polyethylenes are disadvantageously susceptible to brittle fracture/cracking and/or stress cracking caused by external factors in various environments. Non-limiting examples of the external factors include ultraviolet rays, radioactive rays (radiation), heat, internal pressure, external pressure, drop, impacts, flaws or scratches, and chemical substances. Such polyethylenes give highly reactive hydrogen radicals and hydrocarbon radicals by the action typically of ultraviolet rays, radiation, or heat. These radicals undergo recombination or addition reaction to cause molecular weight increase, which is called "crosslinking", or undergo disproportionation to cause molecular weight decrease, which is called "disintegration".

These impair elasticity, resistance to environmental stress cracking, and impact properties of the polyethylenes.

In general, polymeric materials are known to be decomposed by the action typically of ultraviolet rays, radiation, or heat due to molecular excitation and resulting cleavage of bonding. The polyethylenes give hydrogen radicals and/or hydrocarbon radicals by the action typically of ultraviolet rays, radiation, or heat. These radicals are known to be highly reactive, to combine with each other (recombination), to abstract an element to form another radical (abstraction reaction), to be added to a position adjacent to a double bond (addition reaction), and/or to combine with each other and simultaneously cleave a molecular chain (disproportionation). The recombination and the addition reaction cause molecular weight increase, which is called "crosslinking", whereas the disproportionation causes molecular weight decrease, which is called "disintegration".

Both the disintegration and the crosslinking cause polyethylene materials to change in properties such as decrease in elasticity, resulting decrease in resistance to impact and bend, and increase in brittleness. This may cause the polyethylene materials to suffer from defects such as cracking or rupture when the polyethylene materials are used as pipes.

This is also true for polyethylenes for water pipes. The polyethylenes for water pipes are designed to include larger amounts of high molecular weight regions and larger amounts of tie molecules, which couple between crystal structures. Thus, the polyethylenes are allowed to have strength against long-term hydrostatic pressure and resistance to environmental stress cracking at higher levels. In general, it is known that severe environments due typically to ultraviolet rays, radiation, or heat do not significantly affect molecular chains in the crystalline region, but cause increase in noncrystalline portions (amorphous portions), namely, cause oxidative scission of tie molecule chains to proceed. With the progress of tie molecule chain scission, stress concentration occurs in the resin upon the application of external stress, and this may probably cause deterioration in strength against long-term hydrostatic pressure, resistance to environmental stress cracking, and impact properties.

Assume that an external factor such as ultraviolet rays, radiation, or heat acts upon polyethylenes in the air, which contains oxygen. In this case, the generated radicals react with oxygen, because the radicals are highly reactive with oxygen. Oxygen is known to have high affinity for hydrogen and to thereby withdraw hydrogen to form a peroxy radical (ROO·). This causes a reaction such as one represented by following Chemical Formula (1) to initiate an oxidation propagation reaction (chain reaction).

$$R \cdot + O_2 \rightarrow ROO \cdot \cdots \qquad \text{Chemical Formula (1)}$$

The peroxy radical is highly reactive and withdraws hydrogen from another molecule to turn into a peroxide (ROOH) and a radical (R-) (see following Chemical Formula (2)).

$$ROO \cdot + RH \rightarrow ROOH + R \cdot \cdots \text{Chemical Formula} \qquad (2)$$

The newly generated radical (R·) turns into a new peroxy radical in the presence of oxygen according to the above Chemical Formula (1). The peroxide (ROOH) is unstable, and is also decomposed typically into a peroxy radical (ROO·), an oxy radical (RO·), and/or a radical (R-) (see following Chemical Formulae (3) to (5)).

$$ROOH \rightarrow RO \cdot + \cdot OH \cdots \qquad \text{Chemical Formula (3)}$$

$$2\,ROOH \rightarrow ROO \cdot + RO \cdot + H_2O \cdots \qquad \text{Chemical Formula (4)}$$

$$RO \cdot + RH \cdot ROH + R \cdot \cdots \qquad \text{Chemical Formula (5)}$$

As illustrated above, initially generated one radical (R-) causes, via a peroxy radical (ROO·), increase in number of new radicals, and this causes oxidation propagation reactions (chain reactions) to proceed in a chain. This increasingly promotes degradation (crosslinking and/or disintegration) of the molecular structure.

Of components contained in the oil in the polyethylene resin composition having the first feature, not only chain hydrocarbon components and cyclic hydrocarbon components, but also aromatic components particularly functionally combine with the radicals to restrain the oxidation propagation reaction or to restrain the generation of the radical (R-) itself. To more highly functionally restrain oxidation, the oil more preferably contains such an aromatic component, even in a trace amount in terms of %CA of about 0.1%, where the %CA is determined by the n-d-M ring analysis. The aromatic component may have any structure, as long as being a polycyclic structure including two or more rings, where the rings each have a double-bond resonance structure and are linked to each other.

The additive to be added may advantageously further include an additive that effectively restrains the generation of radicals (R·) and/or effectively traps the radicals. Non-limiting examples of the additive include antioxidants exemplified by primary antioxidants, secondary antioxidants, and photostabilizers, such as Irganox 1010 (supplied by BASF SE).

Unlike oils, such an antioxidant in a solid form is expected to be used in an amount according to the intended use, without consideration of compatibility with the base polymer. This allows the oil-based additive to have an enlarged function of eliminating or minimizing oxidation. However, the antioxidant in a solid form is hardly reduced in size to an intermolecular bond level before kneading. The antioxidant in a solid form may act as solid inclusions and as origins (nucleation sites) of voids. In consideration of this, it is important to add the antioxidant in a solid form in an amount within a range not adversely affecting the required strength and to add the same with an oil.

In addition, ozone is known to be generated in the air or in a radiation environment. Ozone intensively acts on polyethylenes, which have double bonds in the molecular chain. For example, ozone forms an ozonide, when ozone attacks the double bond moiety. The ozonide is unstable, undergoes O-O bond scission, and gives one or more products such as aldehydes, ketones, esters, lactones, and peroxides. The molecular structure degradation by ozone is known to form microcracks (ozone cracks). For example, assume that the pipe receives a pressure of 1 MPa. In particularly in this case, the pipe is always in an elongated state. This may increase ozone permeability and may cause stress concentration and resulting ozone crack growth to lead to rupture.

A polyethylene pipe may also be used to transport a high-temperature fluid. In this case, various elementary reactions to cause the molecular structure decomposition are involved in molecular motions, namely, vibration and collision probability. With an elevating temperature, the molecular motions become stronger, and this promotes the decomposition reaction and causes significant deterioration. In particular in a system with an oxidation reaction, it has been found that the temperature affects an oxidized layer thickness, oxygen diffusion rate, and oxidative decomposition reaction rate in a sample. Thus, the oxidative decomposition is more and more accelerated with an elevating temperature in this system. In general, the reaction rate doubles with a temperature rise by 10°C. The polyethylene pipe, when used to transport a high-temperature fluid, readily suffers from decomposition of the molecular structure due to the accelerated oxidative deterioration. The molecular structure change as above leads to reduction or deterioration in various properties, such as reduction in elastic modulus, reduction in tensile strength, and reduction in elongation. The reductions in these properties may cause the pipe to suffer from defects such as cracking or microcracking in the pipe, or rupture of the pipe.

Polyethylene pipe materials are found to undergo cracking and/or fracture by various external factors (external stress).

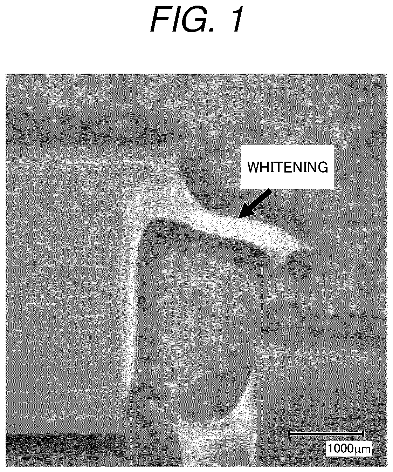

FIG. 1 is a photograph exemplarily showing how a test specimen of a regular polyethylene resin composition ruptures upon receipt of external stress. The test specimen herein is ruptured in a tensile test.

In every fracture mode, test specimens of polyethylene resin compositions offer reduced elongation and give whitening in a fracture surface, regardless of the type of the external stress, and regardless of the magnitudes typically of the density and the molecular weight of the sample polyethylene. In particular, a high-density polyethylene has decreasing impact resistance with an increasing density thereof.

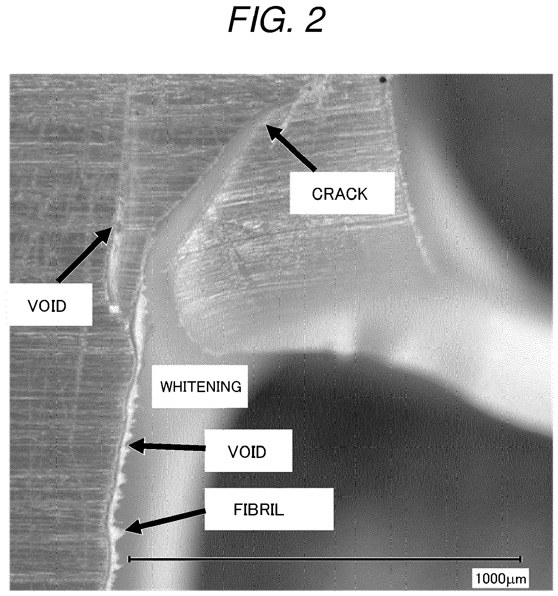

FIG. 2 is an enlarged photograph of FIG. 1.

The fracture surface of a test specimen of a polyethylene resin composition undergoes not only whitening, but also cracking. Thus, voids and fibrils are present in the fracture surface. The whitening is caused by Mie scattering of light due to void formation. As described above, the whitening indicates the occurrence of crazing fracture, which is a damage morphology including voids and fibrils.

Tensile rupture of a polyethylene resin composition is known to proceed according to the following mechanism.

(A) Propagation of a strain-localized region, which occurs immediately after tensile yield;
(B) Propagation of a crazing fracture region
(C) Molecular chain scission and/or cracking in a crazing fracture concentrated area; and
(D) Polymer rupture

In addition, tension is known to cause following deformations (a), (b), and (c) at crystalline level.

(a) Molecular level fracture of crystals (molecular chain detachment);
(b) Block fracture of crystals (molecular chain detachment); and
(c) Intracrystalline slide rotation of molecules (small change)

In the deformations (a) and (b), crystals break to increase an amorphous portion, and molecular chains are detached to form voids and fibrils. This causes crazing fracture. However, in the deformation (c), crystals are less damaged, and an amorphous portion is little increased.

To solve or mitigate the disadvantages inherent to polyethylenes, the present embodiment restrains increase in amorphous portion by causing intracrystalline slide rotation to occur as a tensile deformation at a crystal level. In addition, the embodiment restrains the molecular chain detachment and thereby eliminates or minimizes the formation of voids and fibrils and the occurrence of crazing fracture. This is because the nonpolar solvent that is liquid at room temperature significantly improves intracrystalline molecular slippage and allows the slide rotation to occur more readily.

The polyethylene resin composition having the second feature employs, of oils resulting from refining naphthenic crude oils, a naphthene-containing oil having a %CN of from 20% to 100% inclusive as determined by the n-d-M ring analysis. This oil has solubility and compatibility with the polyethylene at high levels and has a solubility parameter near to that of the polyethylene. This oil is hereinafter referred to as an "oil for use in the present invention". The oil for use in the present invention penetrates even fine, small portions of molecules in crystals, thereby significantly improves the intracrystalline molecular slippage, and effectively allows the slide rotation to occur more readily.

In addition, of oils resulting from refining naphthenic crude oils, the naphthene-containing oil having a %CN of from 20% to 100% inclusive as determined by the n-d-M ring analysis features a low viscosity index. A low viscosity index means high fluidity at low temperatures. Polymeric materials generally disadvantageously tend to undergo low-temperature embrittlement. In particular, high-density polyethylenes are materials having low resistance to impact and disadvantageously have poor impact resistance at low temperatures. To eliminate or minimize this disadvantage, it is important for the oil to be present in polyethylene crystals, in tie molecules, and/or in surroundings around them, so as to allow the slide rotation to occur more readily. The oil present in the crystals, in tie molecules, and/or in surroundings around them, if losing its fluidity at low temperatures, may fail to effectively allow the slide rotation to occur. However, the oil for use in the present invention has fluidity even at low temperatures and effectively allows the slide rotation to occur readily. This is because the high-density polyethylene, when allowing the slide rotation to occur readily even at low temperatures, can resist low-temperature embrittlement and can have significantly better impact resistance at low temperatures.

In addition, polyethylenes have been found to become hard and to become susceptible to embrittlement in a radiation environment. Of oils resulting from refining naphthenic crude oils, the naphthene-containing oil having a %CN of from 20% to 100% inclusive as determined by the n-d-M ring analysis effectively softens the polyethylene. The resulting polyethylene resin composition resists embrittlement by radiation.

After trial and error, the inventors of the present invention found out that it is effective to add a nonpolar solvent or an oil that is liquid at room temperature to a polyethylene so as to allow the polyethylene to have better slippage. This is because the nonpolar solvent or the oil exists in polyethylene crystals, in tie molecules, and/or in surroundings around them to offer better slippage.

The inventors found that any additive that is solid at room temperature acts as an inclusion and as an origin to cause rupture in the polyethylene resin composition having the first feature. A polar solvent, even when being liquid at room temperature, readily exits from the inside of crystals and fails to offer effects. This is because, as compared with the pipe material polyethylene, such polar solvent has higher compatibility with water in the air and with water in the internal fluid.

The inventors also found that a polar solvent repels the polyethylene and hardly enters the crystals, the tie molecules, and/or surroundings around them, because the polyethylene is nonpolar. In addition, the polar solvent less effectively improves slippage as compared with nonpolar solvents and little effectively improves the intracrystalline molecular slippage.

The inventors also found that the naphthene-containing oil having a %CN of from 20% to 100% inclusive as determined by the n-d-M ring analysis in the polyethylene resin composition having the second feature, in particular, highly effectively improves slippage not only at room temperature, but also at low temperatures and gives significantly better intracrystalline molecular slippage. The inventors found that the oil for use in the present invention can eliminate or minimize radiation-caused hardening and resulting embrittlement, because the oil has high affinity for the polyethylene, sufficiently penetrates polyethylene crystals, tile molecules, and/or surroundings around them, and effectively softens the polyethylene material itself.

The inventors made investigations on addition of a nonpolar solvent to the polyethylene resin composition having the first feature, when used as a polyethylene pipe material, to allow the nonpolar oil to be present in crystals, in tie molecules, and/or in surroundings around them. As a result, the inventors found that the nonpolar solvent is preferably added in an amount of 0.1 to 10 parts by mass to offer better slippage. The nonpolar solvent, if added in an amount of less than 0.1 parts by mass, failed to offer sufficient effects, and the resulting composition was no better than a composition containing no nonpolar solvent. In contrast, the nonpolar solvent, if added in an amount of greater than 10 parts by mass, oozed as an oily substance from the surface of the polyethylene pipe material, and this demonstrated that the amount of the nonpolar solvent herein is excessive.

Such a nonpolar solvent as to offer better slippage is particularly desirably selected from oils. Oils have a good track record in uses as lubricants for every material. As a result of trial and error, the inventors successfully allowed an oil to enter polyethylene crystals, tie molecules, and/or surroundings around them. As a result, the inventors found that the oil allows intracrystalline slide rotation to occur as a tensile deformation at a crystal level, thereby restrains increase in amorphous portion, restrains the molecular chain detachment, and eliminates or minimizes the formation of voids and fibrils and the occurrence of crazing fracture.

The inventors made investigations on addition of the oil for use in the present invention to a polyethylene resin composition having the second feature, when used as a polyethylene pipe material, to allow the oil to be present in crystals, in tie molecules, and/or in surroundings around them. As a result, the inventors found that the oil is preferably added in an amount of 0.1 to 7 parts by mass. The oil, if added in an amount of less than 0.1 parts by mass, failed to offer sufficient effects and the resulting composition was no better than a composition without the addition of the oil. In contrast, the oil, if added in an amount greater than 7 parts by mass, oozed from the surface of the polyethylene pipe material, and this demonstrated that the amount of the oil herein is excessive.

Of oils resulting from refining naphthenic crude oils, a naphthene-containing oil having a %CN of from 20% to 100% inclusive as determined by the n-d-M ring analysis has a good track record in uses as lubricants for every material. As a result of trial and error, the inventors successfully allowed the oil to enter crystals of polyethylenes, in particular, of high-density polyethylenes having a density of from 0.94 g/cm$^3$ to 0.97 g/cm$^3$ inclusive, as well as tie molecules, and/or surroundings around them. As a result, the inventors found that the oil allows intracrystalline slide rotation to occur as a tensile deformation at a crystal level, thereby restrains increase in amorphous portion, restrains the molecular chain detachment, and eliminates or minimizes the formation of voids and fibrils and the occurrence of crazing fracture.

The increase in amorphous portion can be examined using differential scanning calorimetry (DSC).

The polyethylene resin composition having the first feature gave results as follows.

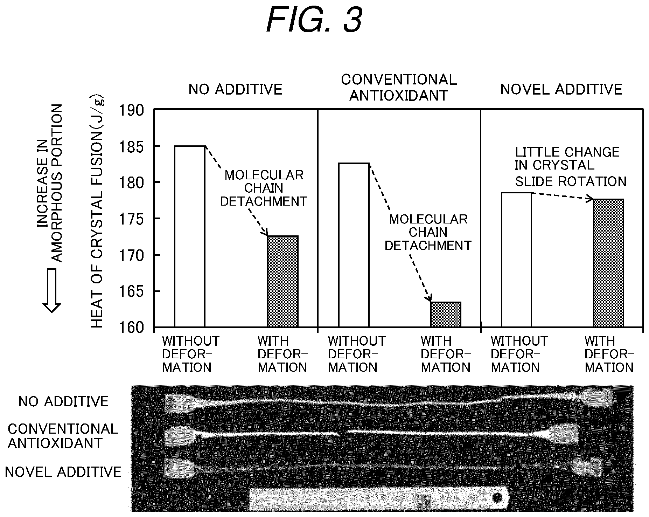

FIG. 3 shows a comparison in heat output per unit mass between a sample before a tensile test, and a sample of a deformed portion after tensile testing, where the heat output per unit mass is determined by quantitatively determining a heat of crystal fusion (heat of crystal melting). In FIG. 3, the "conventional antioxidant" is Irganox 1010 (supplied by BASF SE) added in an amount of 1 part by mass. The "novel additive" is the additive used in the present invention.

As shown in this figure, a polyethylene resin composition with no additive underwent significant decrease in heat of crystal fusion. A polyethylene resin composition including the conventional antioxidant underwent significant decrease in heat of crystal fusion. In contrast, a polyethylene resin composition including the novel additive underwent little change. Elongated portions after tensile testing were examined. As a result as illustrated in the lower part of FIG. 3, the composition including the novel additive remained transparent and did not undergo whitening. In contrast, the composition including no additive and the completion including the conventional antioxidant underwent whitening.

The polyethylene resin composition having the second feature gave results as follows.

A polyethylene resin composition devoid of the oil for use in the present invention underwent significant decrease in heat of crystal fusion. In contrast, a polyethylene resin composition including the oil for use in the present invention underwent little change in heat of crystal fusion. Elongated portions after tensile testing were examined. As a result, the composition including the oil for use in the present invention remained transparent and did not undergo whitening. In contrast, the compositions devoid of the oil for use in the present invention underwent whitening.

The results demonstrate that both the polyethylene resin composition having the first feature and the polyethylene resin composition having the second feature approximately resist increase in amorphous portion and crystalline damages even after tensile deformation. This is probably because slide rotation occurs in crystals, and, as a result, can restrain increase in amorphous portion, can restrain molecular chain detachment, and eliminates or minimizes the formation of voids and fibrils and the occurrence of crazing fracture.

The oil for use as the additive in the polyethylene resin composition having the first feature preferably has a flash point of 140°C or higher. The oil, if having a flash point of lower than 140°C, may mostly volatilize at a polyethylene melting temperature (120°C to 140°C) and may fail to remain in a target amount in the resulting molded article.

The polyethylene resin composition, when designed to include at least one of additives (A) and (B) in a proportion of from 0.1 to 10 parts by mass, resists crazing fracture and less undergoes stress cracking and brittle rupture/cracking. In particular, the additives (A) and (B) offer enormous effects, because they have particularly high compatibility with polyethylenes and highly functionally act as lubricants. The greater the amount of the additives is, the better. However, the upper limit of the amount to be added to the polyethylene is 10 parts by mass. At least one of the additives (A) and (B), if added in a total amount of greater than 10 parts by mass, may undergo oozing and narrow the range of applications to which the molded article is applied. At least one of the additives (A) and (B), if added in an excessively small total amount of less than 0.1 parts by mass, may fail to offer sufficient effects of crystal slide rotation.

The additives (C) and (D), owing to their aromatic components, effectively scavenge (trap) radicals and effectively restrain cracking, in addition to the effects of the additives (A) and (B) to induce the polyethylene crystal slide rotation. In particular, these additives significantly function so as to restrain the formation of the radical R-in the above Chemical Formula (1).

The polyethylene resin composition having the second feature, when designed to include the oil in a proportion of from 0.1 to 7 parts by mass, can resist crazing fracture and less undergoes stress cracking and brittle rupture/cracking. In particular, the oil offers enormous effects because it has particularly high compatibility with polyethylenes and highly functionally acts as a lubricant. The greater the amount to be added is, the better. However, the upper limit of the amount to be added to a polyethylene is 7 parts by mass. The oil, if added in an amount of greater than 7 parts by mass, may undergo oozing and narrow the range of applications to which the molded article is applied. In contrast, the oil, if added in an excessively small amount of less than 0.1 parts by mass, may cause, in particular, impaired impact resistance at low temperatures of 0°C or lower and may fail to sufficiently effectively induce crystal slide rotation. The resulting polyethylene resin composition in this case may have impaired resistance to radiation, because the polyethylene is readily hardened by the action of radiation, to undergo brittle fracture.

In summary, the polyethylene resin compositions according to the present invention resist crazing fracture caused by various external factors and less suffer from reduction in strength against long-term hydrostatic pressure, elasticity, resistance to environmental stress cracking, and impact properties. Specifically, the polyethylene resin compositions according to the present invention can minimize crystal damages, which occur upon the formation of tensile stress under various severe conditions, where such severe conditions are exemplified by, but not limited to, environmental conditions such as high outside air temperatures, ultraviolet rays, ozone, and radiation; as well as oxygen in the air, acid rain, and transportation of high-temperature fluids. This configuration restrains defects or disadvantages such as cracking and rupture over a long term. This also leads to reduction in probability of impact-induced cracking in fluid transportation pipes even upon fluid freezing in a low-temperature environment in winter.

Methods for producing a fluid transportation pipe will be illustrated below. The fluid transportation pipe is hereinafter simply referred to as a "pipe".

In the illustrated embodiments, a high-density polyethylene is used as a base material. However, the base material polyethylene may also be a medium-density or low-density polyethylene.

The polyethylene resin composition having the second feature is highly effective, in particular, for such high-density polyethylenes, and descriptions will be made below on high-density polyethylenes.

A kneader for use herein may be selected from, but not limited to, Banbury mixers and other batch kneaders, twin-screw kneaders, rotor-type twin-screw kneaders, and BUSS co-kneaders. The embodiment exemplified in the present description employs a Banbury mixer to mix an additive with a base material. The kneading is preferably performed at a temperature of 120°C to 250°C.

The additive in the polyethylene resin composition having the first feature desirably includes at least one of the additives (A), (B), (C), and (D).

The additive in the polyethylene resin composition having the second feature desirably includes an oil which belongs to oils resulting from refining naphthenic crude oils and which is a naphthene-containing oil having a %CN of from 20% to 100% inclusive.

The polyethylene resin composition, when used in extrusion molding to give a pipe, may contain titanium oxide in a proportion of from 0.1 to 5 parts by mass to the polyethylene of 100 parts by mass. Pellets of the polyethylene resin are fed with dry blending to a hopper of pipe production equipment, heated and melted in an extruder, extruded through a die into a cylinder, cooled, and yields a pipe.

The pipe may be produced by another method as follows. In advance, master batch pellets and polyethylene resin pellets are fed to a hopper of pellets production equipment and melted and kneaded to give a molten resin composition. The molten resin composition is extruded through a stainless steel multi-perforated disc (having a hole diameter of about 3 mm) into strings into water, each cut to a length of about 3 mm with a rotating knife disposed in parallel with the disc surface, and yield polyethylene resin composition pellets. The pellets are then stored. To produce a high-density polyethylene pipe, the stored polyethylene resin composition pellets are fed to a hopper of pipe production equipment, heated and melted in an extruder, extruded through a die into cylinders, cooled, and yields the pipe.

A non-limiting example of a method for forming (shaping) a pipe via such polyethylene resin composition pellets is a method in which the composition is extruded from an extruder through a die at a temperature of typically 120°C to 250°C, subjected to sizing, cooled in a quench tank, and cut or coiled through a haul-off machine. The pipe may be a single-layer pipe or a two-layer pipe. Non-limiting examples of the extruder include single-screw extruders and twin-screw extruders. The die may be selected from dies of any type, such as straight-head dies, crosshead dies, and offset dies. The sizing may be performed by any technique exemplified by techniques using a sizing plate, an outside mandrel, a sizing box, and an inside mandrel, respectively.

The mixing of the additive with the base material using the Banbury mixer was performed by kneading at a temperature of 150°C to form the polyethylene resin composition having the first feature, or at a temperature of 180°C to form the polyethylene resin composition having the second feature, each for a time of 10 minutes, and the resulting kneadate was granulated and yielded polyethylene resin composition pellets.

The polyethylene resin composition pellets may also be produced by another method as follows. In advance, master batch pellets or polyethylene resin pellets are fed to a hopper of pellet production equipment and melted and kneaded. During the melting and kneading, the oil is added dropwise to the molten, kneaded resin using a microtube pump, which can add the oil at a constant dropping rate, to give a molten resin composition. The molten resin composition is extruded through a multi-perforated stainless steel disc (having a hole diameter of about 3 mm) into strings into water, each cut to a length of about 3 mm with a rotating knife disposed in parallel with the disc surface, and yield the polyethylene resin composition pellets. During dropping, the oil may be heated at a temperature of 140°C or higher for the polyethylene resin composition having the first feature, or heated at a temperature of 190°C or higher for the polyethylene resin composition having the second feature. The polyethylene resin composition pellets are molded into a pipe.

The present invention will be illustrated in further detail with reference to several examples below. It should be noted, however, that the examples are never construed to limit the scope of the invention.

How to prepare test specimens according to the examples will be illustrated below.

In the examples, test specimens were prepared using different additives, on which tensile elongation at break was evaluated.

Example 1

This example relates to polyethylene resin compositions having the first feature.

The example employed a high-density polyethylene as a base material. This base material contains 0.5 parts by mass of titanium oxide per 100 parts by mass of the polyethylene resin. The high-density polyethylene herein is one produced using a Ziegler catalyst and having a density of 0.95 g/cm$^3$ and a melt flow rate of 0.5 g/10 min.

The base material was combined with one or more of the additives (A), (B), (C), and (D). In this process, the components were kneaded using a Banbury mixer at a temperature of 150°C for 10 minutes, granulated, and yielded polyethylene resin composition pellets.

Example 2

This example relates to polyethylene resin compositions having the second feature.

The example employed a high-density polyethylene as a base material. The base material contains 0.5 parts by mass of titanium oxide per 100 parts by mass of the polyethylene resin. The high-density polyethylene used herein is one produced using a Ziegler catalyst and having a density of from 0.94 g/cm$^3$ to 0.97 g/cm$^3$ inclusive.

The base material was combined with an oil, where the oil belongs to oils resulting from refining naphthenic crude oils and is a naphthene-containing oil having a %CN of from 20% to 100% inclusive as determined by the n-d-M ring analysis. In this process, the components were kneaded using a Banbury mixer at a temperature of 180°C for 10 minutes, granulated, and yielded polyethylene resin composition pellets.

The polyethylene resin composition pellets in Examples 1 and 2 were fed to an injection molding machine and yielded Type 1B dumbbell test specimens prescribed in Japanese Industrial Standards (JIS) K 7162.

Tensile Test

Each of the test specimens was heated at 100°C for 500 hours to thermally degrade, before tensile testing.

The tensile test was performed in conformity with Japan Water Works Association Standard "Polyethylene Pipes for Water Supply: JWWA K 144". A testing machine used herein was an apparatus described in JIS B 7721, where the apparatus includes an indicator that indicates the maximum tensile force, and grips that secure the dumbbell test specimen. The thickness of the dumbbell test specimen and the width of the parallel portion were measured, gauge marks for elongation measurement were marked in a central part of the parallel portion, and the test specimen was subjected to the tensile test at a rate of 500 mm/min and at room temperature using the tensile testing machine, with a gauge length of 50 mm. The tensile test was performed to measure an elongation at break. To determine the elongation at break, the length between the gauge marks was measured until (immediately before) the test specimen was ruptured (broken). The elongation at break of the test specimen is calculated according to the following Calculation Formula (1):

$$EB = (L1 - L0) / L0 \times 100 \qquad \cdots \text{Calculation Formula (1)}$$

In the above Calculation Formula (1), EB represents the elongation at break (%); L0 represents the initial gauge length (mm); and L1 represents the gauge length (mm) at break.

Differential Scanning Calorimetry (DSC)

Differential scanning calorimetry (DSC) was performed in conformity with JIS K 7121 "Testing Methods for Transition Temperatures of Plastics". A polyethylene crystal fusion peak area (J) was determined by DSC and was divided by the sample mass (g) to give a fusion energy (J/g). In each sample, a portion (without deformation) which did not receive elongation stress in the tensile test, and a portion (with deformation) which received elongation stress and deformed in the tensile test were compared with each other.

An increasing change in fusion energy (J/g) indicates larger crystal damages, increasing amorphous portions, and increasing occurrence of molecular chain detachment.

Comparative Example 1

According to Comparative Example 1, test specimens were prepared and subjected to evaluations by a procedure similar to that in Example 1, except for adding no additive.

Table 1 relates to the test specimens according to Example 1 and presents the type and amount of the additive, and the evaluation results, i.e., elongation at break and fusion energy in samples with or without deformation. In this table, test specimens of the same number include the additive in different amounts and offer different elongations at break. This means that the elongations at break were measured at different amounts of the additive, where the amounts of the additive are used as a parameter. Test Specimens 1 to 12 are specimens according to Example 1, and a test specimen indicated as "without additive" or "no additive" is a specimen according to Comparative Example 1.

TABLE 1

| Test Piece No. | | 1 | 2 | 3 | 4 | 5 | 6 | 7 | 8 | 9 | 10 | 11 | 12 | No Additive |
|---|---|---|---|---|---|---|---|---|---|---|---|---|---|---|
| Additive (A) | | 0.1 to 10 | - | - | - | 0.1 to 5 | 0.1 to 5 | 0.1 to 5 | - | - | - | 0.1 to 3 | 0.1 to 2.5 | - |
| Additive (B) | | - | 0.1 to 10 | - | - | 0.1 to 5 | - | - | 0.1 to 5 | 0.1 to 5 | - | 0.1 to 3 | 0.1 to 2.5 | - |
| Additive (C) | | - | - | 0.1 to 10 | - | - | 0.1 to 5 | - | 0.1 to 5 | - | 0.1 to 5 | 0.1 to 3 | 0.1 to 2.5 | - |
| Additive (D) | | - | - | - | 0.1 to 10 | - | - | 0.1 to 5 | - | 0.1 to 5 | 0.1 to 5 | - | 0.1 to 2.5 | - |
| Melting Energy (J/g) | No Deformation | 178 | 180 | 178 | 179 | 178 | 179 | 179 | 179 | 180 | 178 | 179 | 178 | 185 |
| | Deformed Part | 176 | 178 | 177 | 178 | 177 | 179 | 179 | 179 | 180 | 178 | 179 | 178 | 173 |
| Elongation at break (%) | | 500 to 360 | 530 to 380 | 600 to 400 | 610 to 420 | 550 to 400 | 610 to 450 | 630 to 460 | 640 to 470 | 650 to 490 | 650 to 500 | 660 to 520 | 670 to 550 | 35 |
| Unit of Additives (A) to (D) is "parts by mass". | | | | | | | | | | | | | | |

As demonstrated in Table 1, test specimens according to Example 1 have greater elongations at break as compared with the test specimen according to Comparative Example 1. The test specimens each including two or more different additives also have greater elongations at break.

The test specimens according to Example 1 have greater fusion energy as compared with the test specimen according to Comparative Example 1, where the fusion energy was determined by DSC. This verified that the test specimens according to Example 1 undergo very small crystal damages by tensile stress.

Radiation Irradiation

In radiation irradiation, gamma rays emitted from cobalt-60 (Co-60) source were applied to each test specimen at a dose rate of 1 kGy/hr. The irradiation was performed for a time of 110 hr to 521 hr at an absorbed dose of 50 kGy to 500 kGy.

Environmental Stress Cracking Test

An environmental stress cracking test is performed in conformity with Japan Water Works Association Standard "Polyethylene Pipes for Water Supply: JWWA K 144". Test specimens are strip specimens 38 mm long, 13 mm wide, and 2 mm thick and being notched 0.3 mm deep and 19.1 mm long. Nonyl pheny poly(oxyethylene)ethanol as a 10 mass percent aqueous solution at 50°C is placed in a hard glass test tube (with a stopper). Five test specimens are secured at a stainless steel test-specimen fixture and immersed in the solution. The test specimens after immersion were visually observed on appearance, and a time at which cracking occurs is examined.

Izod Impact Test

An Izod impact test is performed in conformity with JIS K 7110 "Plastics-Determination of Izod impact strength". However, the Izod impact strength is measured at a lower test specimen temperature of -10°C. A test specimen has a size of 80 mm by 10 mm by 4 mm and is notched with type A notches having a radius of 0.25 mm. The test specimen is held at a constant temperature in an oven and is secured to supports. The pendulum strikes the notched face of the test specimen. The test is performed at a temperature of -10°C. The determined Izod impact value is indicated in kJ/m2.

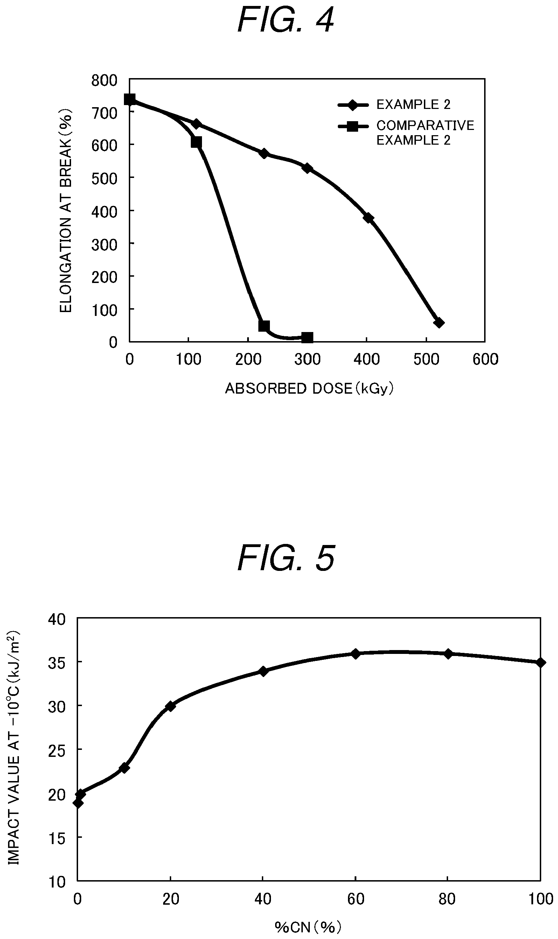

FIG. 4 is a graph showing how the elongation at break varies depending on the absorbed dose. An additive used was an oil which belongs to oils resulting from refining naphthenic crude oils and which is a naphthene-containing oil having a %CN of 50% as determined by the n-d-M ring analysis. A base material used was a polyethylene having a density of 0.95 g/cm3. The additive was used in an amount of 5 parts by hundred parts by mass (phr) of the resin (polyethylene). The abscissa indicates the absorbed dose (kGy), and the ordinate indicates the elongation at break in the tensile test.

Comparative Example 2

According to Comparative Example 2, test specimens were prepared and evaluated by a procedure similar to that in Example 2, except for adding no additive.

As shown in FIG. 4, Example 2 has greater elongations at break as compared with Comparative Example 2.

The test specimens before and after tensile testing were subjected to differential scanning calorimetry. The results demonstrated that Example 2 has a smaller change in fusion energy between before and after tensile testing and has higher fusion energy even after tensile testing, as compared with Comparative Example 2. This demonstrated that Example 2 undergoes very small crystal damages caused by tensile stress.

FIG. 5 is a graph showing how the Izod impact test result (impact value at - 10°C) varies depending on the %CN of oil. Additives used were oils which belong to oils resulting from refining naphthenic crude oils and which have %CN of from 0% to 100% as determined by the n-d-M ring analysis. A base material used was a polyethylene having a density of 0.95 g/cm3. The additives were each used in an amount of 5 phr. The abscissa indicates the %CN of oil as determined by the n-d-M ring analysis, and the ordinate indicates the impact value at -10°C in the Izod impact test.

FIG. 5 demonstrates that oils having a %CN of from 20% to 100% as determined by the n-d-M ring analysis have high impact values at -10°C.

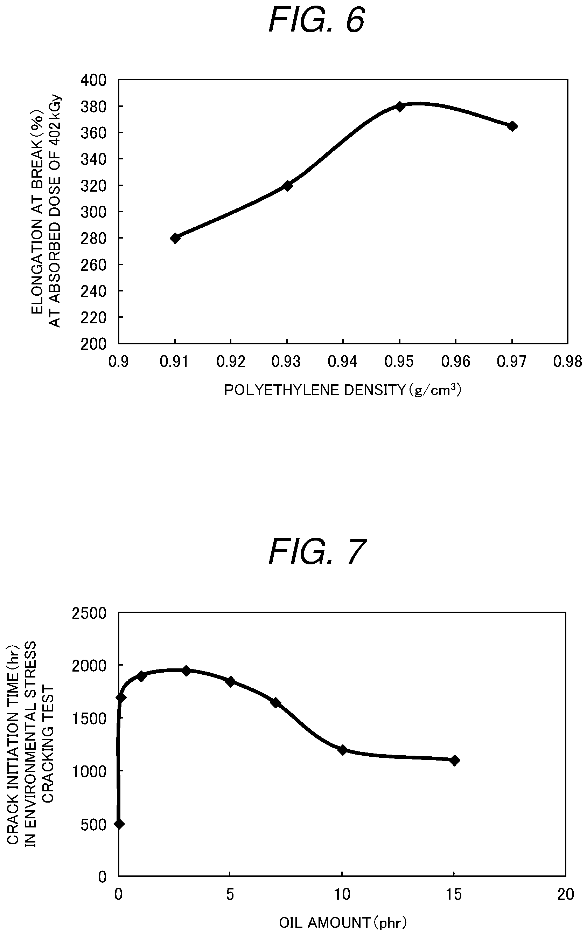

FIG. 6 is a graph showing how the elongation at break varies depending on the polyethylene density. An additive used was an oil which belongs to oils resulting from refining naphthenic crude oils and which has a %CN of 50% as determined by the n-d-M ring analysis. Base materials used were polyethylenes having a density of from 0.91 to 0.97 g/cm3. The additive was used in an amount of 5 phr. The abscissa indicates the polyethylene density, and the ordinate indicates the elongation at break in the tensile test performed on test specimens after radiation irradiation at an absorbed dose of 402 kGy.

As shown in FIG. 6, the samples have an elongation at break of 340% or more at a polyethylene density of from 0.94 g/cm3 to 0.97 g/cm3. This demonstrates that the polyethylene preferably has a density of from 0.94 g/cm3 to 0.97 g/cm3 inclusive.

FIG. 7 is a graph showing how the crack initiation time in the environmental stress cracking test varies depending on the oil amount. An additive used was an oil which is an oil resulting from refining a naphthenic crude oil and which has a %CN of 50% as determined by the n-d-M ring analysis. A base material used was a polyethylene having a density of 0.95 g/cm3. The additive was used in amounts of from 0 phr to 15 phr. The abscissa indicates the amount of the additive (oil), and the ordinate indicates the crack initiation time in the environmental stress cracking test.

As shown in FIG. 7, the samples have a crack initiation time of 1500 hours or longer in the environmental stress cracking test at an amount of the oil of from 0.1 phr to 7 phr. This demonstrates that the additive (oil) is desirably used in an amount of from 0.1 phr to 7 phr inclusive.

As described above, it has been demonstrated that the present invention can provide long-life polyethylene resin compositions which resist brittle fracture/cracking, environmental stress cracking, and brittle fracture at low temperatures.

The present invention can provide pipe materials, pipes, and joints which resist brittle fracture/cracking and stress cracking caused by stress concentration on, if any, invisible minute defects and which have elongation and impact strength at sufficient levels. More specifically, polyethylenes, when affected typically by ultraviolet rays, high temperatures, or radiation, give hydrogen radicals and/or hydrocarbon radicals each of which is extremely highly reactive. The radicals undergo recombination and/or addition reaction and cause molecular weight increase called crosslinking, or cause molecular weight decrease called disintegration. These changes in molecular weight cause deterioration in properties such as elasticity, elongation, resistance to environmental stress cracking, and impact properties. The present invention can eliminate or minimize the problems of deterioration in properties. The present invention can therefore give resistance to brittle fracture/cracking and stress cracking when used typically as or for pipes and joints over a long term.

Further, in the following aspects of the invention are provided.

1) A polyethylene resin composition comprising: a base material mainly including a polyethylene; and an additive, wherein the additive includes a nonpolar substance that is a liquid at room temperature, and a proportion of the additive is 0.1 to 10 parts by mass to the polyethylene of 100 parts by mass.

2) The polyethylene resin composition according to aspect 1), wherein the nonpolar substance includes an oil.

3) The polyethylene resin composition according to aspect 2), wherein the oil has a flash point of 140°C or higher.

4) The polyethylene resin composition according to aspects 2) or 3), wherein the oil includes at least one selected from the group consisting of: oils each resulting from refining a raw-material naphthenic crude oil; and oils each resulting from refining a raw-material paraffinic crude oil.

5) The polyethylene resin composition according to aspect 4), wherein the oil includes an oil including an aromatic component.

6) A pipe material comprising the polyethylene resin composition according to any one of aspects 1) to 5).

7) A pipe comprising the polyethylene resin composition according to any one of aspects 1) to 5).

8) A joint comprising the polyethylene resin composition according to any one of aspects 1) to 5).

9) A polyethylene resin composition comprising: a base material mainly including a polyethylene; and an additive, wherein the additive includes an oil which belongs to oils resulting from refining naphthenic crude oils and which is a naphthene-containing oil having a percent naphthenic carbons (%CN) of from 20% to 100% inclusive, where the %CN is determined by an n-d-M ring analysis.

10) The polyethylene resin composition according to aspect 9), wherein a proportion of the additive is 0.1 to 7 parts by mass to the polyethylene of 100 parts by mass.

11) The polyethylene resin composition according to aspects 9) or 10), wherein the polyethylene mainly includes a high-density polyethylene having a density of from 0.94 g/cm3 to 0.97 g/cm3 inclusive.

12) A pipe material comprising the polyethylene resin composition according to any one of aspects 9) to 11).

13) A pipe comprising the polyethylene resin composition according to any one of aspects 9) to 11).

14) A joint comprising the polyethylene resin composition according to any one of aspects 9) to 11).

15) The pipe material according to aspect 12), being a member constituting a nuclear facility.

16) The pipe according to aspect 13), being a member constituting a nuclear facility.

17) The joint according to aspect 14), being a member constituting a nuclear facility.

While the present invention has been described with reference to several embodiments and examples, such description using specific terms is only for the purpose of illustrating and comprehending the invention, and the scope of the invention is not limited to one having all the described configurations. For example, it is possible to replace part of the configuration of an embodiment with the configuration of another embodiment; and to combine the configuration of an embodiment with the configuration of another embodiment. It is also possible for part of the configuration of each embodiment to be deleted, to be replaced with another configuration, or to be combined with another configuration.

**Claims**

1. A polyethylene resin composition comprising:

   a base material mainly including a polyethylene; and
   an additive,
   wherein a proportion of the additive is from 0.1 to 10 parts by mass to the polyethylene of 100 parts by mass, and the additive is an oil which is a mixture of two or more of the following four additives, and which contains at least one of the additive (C) and the additive (D).

   Additive (A): an oil obtained by refining a naphthenic crude oil as a raw material,
   Additive (B): an oil obtained by refining a paraffinic crude oil as a raw material,
   Additive (C): an oil obtained by refining a naphthenic crude oil as a raw material and containing an aromatic component,
   Additive (D): an oil obtained by refining a paraffinic crude oil as a raw material and containing an aromatic component.

2. The polyethylene resin composition according to claim 1,
   wherein the additive is an oil obtained by mixing the additive (A) and the additive (C).

3. The polyethylene resin composition according to claim 2,
   wherein a proportion of the additive (A) is from 0.1 to 5 parts by mass to the polyethylene of 100 parts by mass, and a proportion of the additive (C) is from 0.1 to 5 parts by mass to the polyethylene of 100 parts by mass.

4. The polyethylene resin composition according to claim 1,
   wherein the additive is an oil obtained by mixing the additive (A) and the additive (D).

5. The polyethylene resin composition according to claim 4,
   wherein a proportion of the additive (A) is from 0.1 to 5 parts by mass to the polyethylene of 100 parts by mass, and a proportion of the additive (D) is from 0.1 to 5 parts by mass to the polyethylene of 100 parts by mass.

6. The polyethylene resin composition according to claim 1,
   wherein the additive is an oil obtained by mixing the additive (B) and the additive (C).

7. The polyethylene resin composition according to claim 6,
   wherein a proportion of the additive (B) is from 0.1 to 5 parts by mass to the polyethylene of 100 parts by mass, and a proportion of the additive (C) is from 0.1 to 5 parts by mass to the polyethylene of 100 parts by mass.

8. The polyethylene resin composition according to claim 1,
   wherein the additive is an oil obtained by mixing the additive (B) and the additive (D).

9. The polyethylene resin composition according to claim 8,
wherein a proportion of the additive (B) is from 0.1 to 5 parts by mass to the polyethylene of 100 parts by mass,
and a proportion of the additive (D) is from 0.1 to 5 parts by mass to the polyethylene of 100 parts by mass.

10. The polyethylene resin composition according to claim 1,
wherein the additive is an oil obtained by mixing the additive (C) and the additive (D).

11. The polyethylene resin composition according to claim 10,
wherein a proportion of the additive (C) is from 0.1 to 5 parts by mass to the polyethylene of 100 parts by mass,
and a proportion of the additive (D) is from 0.1 to 5 parts by mass to the polyethylene of 100 parts by mass.

12. The polyethylene resin composition according to claim 1,
wherein the additive is an oil obtained by mixing the additive (A), the additive (B), and the additive (C).

13. The polyethylene resin composition according to claim 12,
wherein a proportion of the additive (A) is from 0.1 to 3 parts by mass to the polyethylene of 100 parts by mass,
a proportion of the additive (B) is from 0.1 to 3 parts by mass to the polyethylene of 100 parts by mass,
and a proportion of the additive (C) is from 0.1 to 3 parts by mass to the polyethylene of 100 parts by mass.

14. The polyethylene resin composition according to claim 1,
wherein the additive is an oil obtained by mixing the additive (A), the additive (B), the additive (C), and the additive (D).

15. The polyethylene resin composition according to claim 14,
wherein a proportion of the additive (A) is from 0.1 to 2.5 parts by mass to the polyethylene of 100 parts by mass,
a proportion of the additive (B) is from 0.1 to 2.5 parts by mass to the polyethylene of 100 parts by mass,
a proportion of the additive (C) is from 0.1 to 2.5 parts by mass to the polyethylene of 100 parts by mass,
and a proportion of the additive (D) is from 0.1 to 2.5 parts by mass to the polyethylene of 100 parts by mass.

16. The polyethylene resin composition according to anyone of claims 1 to 15,
wherein the oil has a flash point of 140 °C or higher.

17. The polyethylene resin composition according to anyone of claims 1 to 16,
wherein the high-density polyethylene has a density of from 0.945 $g/cm^3$ to 0.965 $g/cm^3$.

18. A piping material comprising the polyethylene resin composition according to any one of claims 1 to 17.

19. A pipe comprising the polyethylene resin composition according to any one of claims 1 to 17.

20. A joint comprising the polyethylene resin composition according to any one of claims 1 to 17.

# FIG. 1

## FIG. 2

EP 3 778 745 A1

*FIG. 3*

## FIG. 4

## FIG. 5

# FIG. 6

# FIG. 7

Europäisches
Patentamt

European
Patent Office

Office européen
des brevets

# EUROPEAN SEARCH REPORT

Application Number

EP 20 18 7000

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X | US 2007/112127 A1 (SOEDIONO MAHALIA [US] ET AL) 17 May 2007 (2007-05-17) | 1,2,4,6, 8,10,12, 14,18-20 | INV. C08K5/01 C08L23/06 F16L9/12 |
| Y | * claims 1,12-14 * <br> * paragraphs [0003], [0004], [0008], [0190] * <br> * examples 58-62; tables 17-21 * <br> ----- | 1-20 | |
| Y | WO 02/18487 A1 (DSM NV [NL]; SCHMIDT ANGELIKA [NL] ET AL.) 7 March 2002 (2002-03-07) * claims 1,5,9 * * page 4, line 2 - line 13 * ----- | 1-20 | |
| Y | US 2006/121269 A1 (MILLER ERIC H [US] ET AL) 8 June 2006 (2006-06-08) * claims 1,8 * * paragraph [0027] * ----- | 1-20 | |

**TECHNICAL FIELDS SEARCHED      (IPC)**

C08K
C08L
F16L

The present search report has been drawn up for all claims

| Place of search | Date of completion of the search | Examiner |
|---|---|---|
| Munich | 16 December 2020 | Lippert, Sigrid |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................

& : member of the same patent family, corresponding
    document

EPO FORM 1503 03.82 (P04C01)

## EP 3 778 745 A1

### ANNEX TO THE EUROPEAN SEARCH REPORT
### ON EUROPEAN PATENT APPLICATION NO.

EP 20 18 7000

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2020

| Patent document cited in search report | | Publication date | Patent family member(s) | | Publication date |
|---|---|---|---|---|---|
| US 2007112127 | A1 | 17-05-2007 | AR | 064044 A1 | 11-03-2009 |
| | | | AT | 525432 T | 15-10-2011 |
| | | | BR | PI0717903 A2 | 08-07-2014 |
| | | | CN | 101595175 A | 02-12-2009 |
| | | | EP | 2089471 A1 | 19-08-2009 |
| | | | ES | 2369161 T3 | 28-11-2011 |
| | | | JP | 5672471 B2 | 18-02-2015 |
| | | | JP | 2010511749 A | 15-04-2010 |
| | | | KR | 20090085149 A | 06-08-2009 |
| | | | TW | 200837124 A | 16-09-2008 |
| | | | US | 2007112127 A1 | 17-05-2007 |
| | | | US | 2011003929 A1 | 06-01-2011 |
| | | | WO | 2008067503 A1 | 05-06-2008 |
| WO 0218487 | A1 | 07-03-2002 | AT | 358159 T | 15-04-2007 |
| | | | AU | 9436101 A | 13-03-2002 |
| | | | DE | 60127564 T2 | 13-12-2007 |
| | | | EP | 1313805 A1 | 28-05-2003 |
| | | | JP | 2004507602 A | 11-03-2004 |
| | | | NL | 1016055 C2 | 01-03-2002 |
| | | | US | 2003181575 A1 | 25-09-2003 |
| | | | WO | 0218487 A1 | 07-03-2002 |
| US 2006121269 | A1 | 08-06-2006 | CN | 101072671 A | 14-11-2007 |
| | | | EP | 1824671 A2 | 29-08-2007 |
| | | | EP | 2586609 A1 | 01-05-2013 |
| | | | EP | 3466670 A1 | 10-04-2019 |
| | | | ES | 2527445 T3 | 23-01-2015 |
| | | | JP | 5085335 B2 | 28-11-2012 |
| | | | JP | 5351906 B2 | 27-11-2013 |
| | | | JP | 2008523211 A | 03-07-2008 |
| | | | JP | 2011105947 A | 02-06-2011 |
| | | | KR | 20070085740 A | 27-08-2007 |
| | | | KR | 20080109891 A | 17-12-2008 |
| | | | KR | 20110079751 A | 07-07-2011 |
| | | | US | 2006121269 A1 | 08-06-2006 |
| | | | US | 2008300332 A1 | 04-12-2008 |
| | | | US | 2008315447 A1 | 25-12-2008 |
| | | | US | 2009305127 A1 | 10-12-2009 |
| | | | US | 2017072610 A1 | 16-03-2017 |
| | | | US | 2017207434 A1 | 20-07-2017 |
| | | | US | 2018029276 A1 | 01-02-2018 |
| | | | WO | 2006062739 A2 | 15-06-2006 |

EPO FORM P0459

For more details about this annex : see Official Journal of the European Patent Office, No. 12/82

**EP 3 778 745 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO6142736 B
- JP SHO6143378 B
- JP HEI1017619 B
- JP HEI08301933 B